# EUROPEAN PATENT SPECIFICATION

(11) **EP 3 010 774 B1**
(45) Date of publication and mention of the grant of the patent: **19.04.2017**
(21) Application number: 13731121.3
(22) Date of filing: 20.06.2013
(51) Int. Cl.: B61D 17/02, B61D 17/06

(54) **HIGH-SPEED RAIL VEHICLE PROVIDED WITH A STREAMLINED NOSE**
HOCHGESCHWINDIGKEITSSCHIENENFAHRZEUG MIT VERSCHLANKTER NASE
VÉHICULE FERROVIAIRE À GRANDE VITESSE COMPORTANT UN NEZ AÉRODYNAMIQUE

(43) Date of publication of application: 27.04.2016
(73) Proprietor: Bombardier Transportation GmbH, 10785 Berlin (DE)
(72) Inventor: HARNACK, Lars, 13505 Berlin (DE); ORELLANO, Alexander, 13629 Berlin (DE)
(74) Representative: Alatis
(86) International application number: PCT/EP2013/062947
(87) International publication number: WO 2014/202147

(56) References cited:
- EP-A1- 0 722 872

## Description

### TECHNICAL FIELD OF THE INVENTION

The invention relates to the external shape of the nose of a high-speed rail vehicle, in particular a rail vehicle having a cruising speed of more than 300 km/h.

### BACKGROUND ART

A railway vehicle with a streamlined nose is disclosed in EP 0 722 872 A (corresponding to the preamble of claim 1). The nose is the segment of the car body at which the car body cross-sectional area progressively increases in the longitudinal direction from a tip of the car body at one end of the vehicle towards the other end thereof. The nose described in this document is composed of at least a tip region and an intermediate region adjoining said tip region and more remote from the said tip than said tip region. Throughout the intermediate region the car body cross-sectional area increases at a constant rate in the longitudinal direction away from said tip. The intermediate region includes the position at which the car body cross-sectional area is half the maximum car body cross-sectional area of the vehicle. Throughout said tip region the car body cross-sectional area increases in the longitudinal direction at a constant rate greater than said constant rate of said intermediate region. A driving cabin windshield is located in said intermediate region and has an angle to the vertical permitting visibility ahead. At the location of the windshield in the longitudinal direction, the car body has recesses in its sides. Because the sectional area change rate of the tip region is greater than in the intermediate region, room is secured in the intermediate region for the driving cabin. The nose shape attempts to provide a compromise between a reduction of the fine atmospheric pressure waves and a required visibility through the windshield. In practice, however, the resulting overall length of the nose, including the tip region and intermediate region, exceeds 6,5 meters with a windshield angle of 26° to 28°. More room is allocated to the tip segment than would be necessary for structural purposes, in particular for impact-absorbing features. The visibility through the inclined windshield is less than desirable. In other words, the aerodynamic optimisation of the vehicle comes at a cost in terms of required length and visibility.

The factors affecting a good aerodynamic design of a train leading car nose shape are reviewed in the article "Tunnel optimized train nose shape" by J-L Peters in the proceedings of the 10th International Symposium on Aerodynamics and Ventilation of Vehicle Tunnels, Boston, USA, 1-3 November 2000, ISBN 1-86058-255-9. This article also discusses the design of the nose shape of the "Talgo TAV" developed in accordance with the so-called "area rule" to minimise sonic-boom effects. The main disadvantage of the Talgo TAV nose lies in the great distance between the front end of the vehicle and the windshield.

### SUMMARY OF THE INVENTION

The foregoing shortcomings of the prior art are addressed by the present invention. Accordingly, it is an object of the present invention in view of the above mentioned problems to provide a rail vehicle, in particular a high-speed vehicle travelling at a cruising speed of more than 300 km/h, which combines a sharp windshield inclination, a short distance from the front end of the vehicle to the windshield and a short overall length of the nose, without adversely affecting the aerodynamic optimisation.

According to the invention as defined in claim 1, there is provided a rail vehicle having a central segment of constant cross-sectional area and a nose of varying cross-sectional area, the nose consisting of a tip segment including a front or rear end of the rail vehicle, and an intermediate segment including an inclined wall provided with a windshield, external side walls and a roof, the intermediate segment having a cross-sectional area that increases with the distance to the end, the vehicle being further provided with a bogie at least partially located in the intermediate segment, the nose being divided by a horizontal reference plane in an upper part located above the horizontal reference plane and a lower part located below the horizontal reference plane, characterised in that:
- a median line of the inclined wall located at an intersection between the inclined wall and a vertical longitudinal median plane of the rail vehicle has a slope of more than 35° and less than 60°, preferably less than 45°, preferably a slope of 40°;
- each of the external side walls includes a lower wall part below the horizontal reference plane and an upper wall part located above the reference plane, wherein the upper wall part is inwardly offset with respect to the lower wall part, such that the upper part of the nose has a width measured in cross-section between the side walls, which, at least in the intermediate segment, increases with the distance to the end of the vehicle.

The upper part of each side wall progressively diverges from the longitudinal vertical median plane. As the windshield angle is substantially greater than in the prior art, the surface of the windshield can be kept small for a given vision field. This reduction of the surface of the windshield has a positive impact on the weight and on the noise reduction in the driving cabin.

The upper part of the side walls in the intermediate segment can be substantially curved or planar. In the latter case, the upper part of the nose has a width measured in cross-section between the side walls, which, at least in the intermediate segment, increases at a constant rate with the distance to the end of the vehicle. The upper wall part preferably makes with the vertical longitudinal plane a constant angle of more than 5°, preferably more than 6° and less than 10°, preferably less than 8° measured in the horizontal reference plane. The upper part of the nose has a width measured between the upper parts of the two side walls in any cross-sectional plane, which increases proportionally to the distance to the end. This enables to increase the windshield angle and to reduce the distance between the windshield and the end of the vehicle, while substantially complying with the "area rule" and the other criteria relevant for the aerodynamic performance.

Preferably, the vehicle is further provided with a driving cabin at least partially located in the intermediate segment, longitudinally between the windshield and the bogie, the driving cabin having a floor, the nose being vertically divided by a horizontal reference plane in an upper part located above the horizontal reference plane and including the floor of the driving cabin and a lower part located below the horizontal reference plane and including the bogie.

Preferably, the bogie is partially located in the nose.

According to a preferred embodiment, the horizontal reference plane is above the bogie and the lower part has a width that increases from the tip segment towards the bogie so as to reach a maximal width larger than a width of the bogie. Each side wall forms a step between the lower part and the upper part. The steps are preferably substantially horizontal and located in the horizontal reference plane. The lower part of the nose of the vehicle constitutes an aerodynamic shielding of the bogie.

According to a preferred embodiment, the upper part of each of the side walls located above the reference plane extends at least from a tip end of the windshield to a tip end of the bogie and preferably over the entire length of the intermediate segment, from the tip segment to the central segment of the vehicle. Accordingly, the width of the upper part of the nose linearly varies between a maximum value equal to a width of the central segment of the rail vehicle, and a minimum value, which is less than 60%, preferably less than 55% preferably less than 50% of the width of the central segment. According to a preferred embodiment, the upper part of each of the side walls is substantially vertical.

The roof of the nose is preferably such that a median line of the roof located at an intersection between the roof and the vertical longitudinal median plane and extending from the inclined wall to the central segment of the train has a slope of between 5° and 10°, preferably between 6° and 8°.

The rail vehicle preferably includes a driving cabin provided with a driver's console at least partially located in the intermediate segment, longitudinally between the windshield and a tip end of the bogie and laterally between the upper parts of the side walls. The floor of the driving cabin is preferably located above the horizontal reference plane.

The end of the vehicle is preferably located below the horizontal reference plane in the lower part of the nose of the vehicle for aerodynamic reasons.

Crash absorber elements may be housed in the lower part of the nose of the vehicle. According to one embodiment, the crash absorber elements are at least partially located below the windshield. While the shock absorber elements are closer to the driving cabin than in the prior art, the space in front of the driver's console below the horizontal plane is sufficient to accommodate these elements without adversely affecting the safety performances in case of impact. A coupler may also be accommodated in the lower part of the nose of the vehicle.

The rail vehicle may be provided with a side access door giving access to the driving cabin through a passageway. According to an embodiment, the bogie is located between the end and the access door.

According to an embodiment, the median line of the inclined wall including the windshield is substantially rectilinear.

According to a preferred embodiment, the inclined wall provided with the windshield has a substantially cylindrical or frusto-conical geometric envelope. These shapes are selected because they provide rigidity to the windshield.

Preferably, the median line of the roof segment is substantially rectilinear.

According to a preferred embodiment, the cross-sectional area of the nose in the intermediate segment increases substantially linearly with the distance to the end. The cross-sectional area A(x) of the intermediate segment varies with the distance (x) to the end, at a substantially constant rate dA(x)/dx in the range of 2,1±0,1 meters. Preferably, the same rules hold over the entire length of the nose, i.e. both in the tip segment and intermediate segment.

The rail vehicle may be provided with cameras to take images of the sides of the rail vehicle, in particular if the restricted width of the driving cabin between the side walls reduces the visibility on the sides of the vehicle. The cameras are preferably connected to display screens located in the vehicle cabin to display these images.

The rail vehicle can advantageously be provided with side covers covering the sides of the bogie for aerodynamic and acoustic reasons.

A number of modifications can be envisaged. Technical features disclosed in connection with one aspect or embodiment of the invention can be combined with other aspects or embodiments, if thereby remaining within the scope of the invention as defined by the appended claims.

### BRIEF DESCRIPTION OF THE FIGURES

Other advantages and features of the invention will become more clearly apparent from the following description of specific embodiments of the invention given as non-restrictive example only and represented in the accompanying drawings in which:
- figure 1 is an isometric view of a rail vehicle according to one embodiment of the invention;
- figure 2 is a side view of the rail vehicle of figure 1;
- figure 3 is a front view of the rail vehicle of figure 1;
- figure 4 is an illustrations of cross-sections of a the rail vehicle of figure 1, corresponding to the plane A-A, B-B, C-C and D-D in figure 2;
- figure 5 is a top view of the rail vehicle of figure 1;
- figure 6 is a schematic side view showing the interior of a driving cabin of the vehicle of figure 1;
- figure 7 is a schematic top view showing the interior of the driving cabin of the vehicle of figure 1.

Corresponding reference numerals refer to the same or corresponding parts in each of the figures.

### DETAILED DESCRIPTION OF AN EMBODIMENT

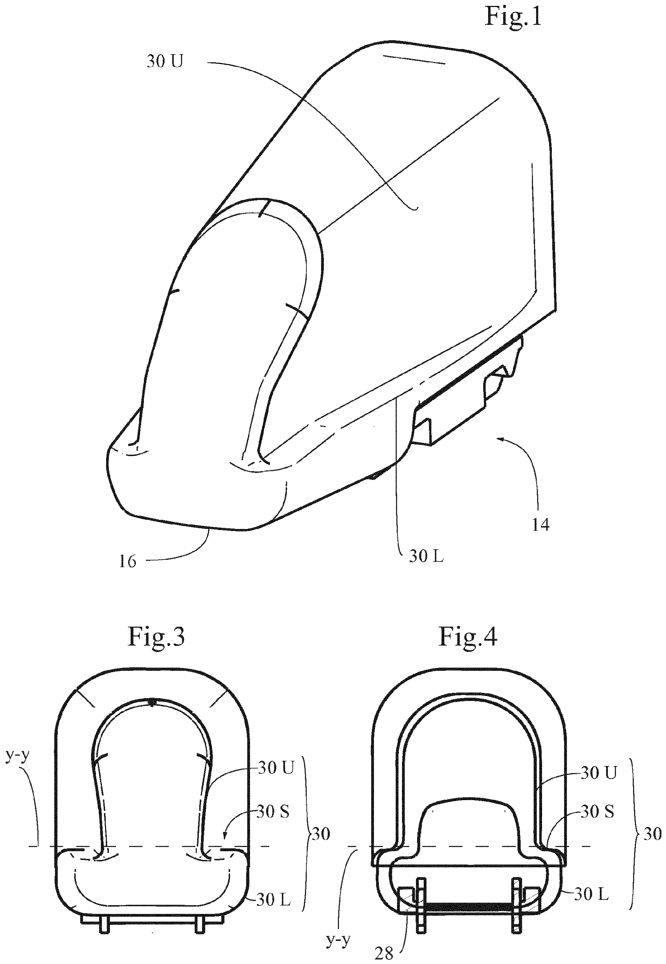

Referring to the figures, a rail vehicle 10 includes a central segment 12 of substantially constant cross-section and a nose 14 having cross-sectional area that increases from a front end 16 of the vehicle towards the central segment 12. The nose can be divided in two segments, namely a tip segment 18 including the front end or tip of the vehicle illustrated in Figs. 1 and 3 and an intermediate segment extending longitudinally from the tip segment 18 to the central segment. A cross-sectional geometric plane A-A separates the tip segment 18 from the intermediate segment and a cross-sectional geometric plane D-D separates the intermediate segment from the central segment.

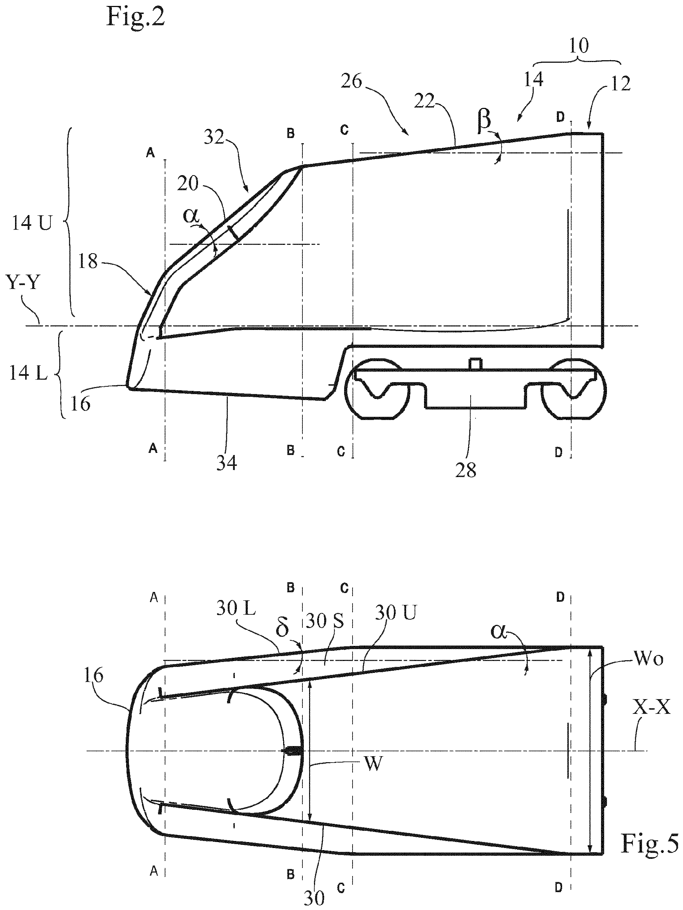

The external longitudinal profile of the nose of the rail vehicle viewed from the side is best seen in Fig. 2. The outline of the longitudinal section of the rail vehicle by a vertical longitudinal median plane X-X includes a sharply increasing line in the tip segment 18 between the front end 16 and the cross-sectional plane A-A, followed by a substantially straight line 20 between the plane A-A and a cross-sectional plane B-B, and a smoothly sloping straight line 22 between the plane B-B and the cross-sectional plane D-D. The slope of the profile is sharper in the tip region than in the segment between planes A-A and B-B where a windshield 24 is located. In this part, the slope is constant and makes an angle α with the horizontal plane of more than 35°, preferably 40° or more, and less than 60°. The slope of the profile between the planes B-B and D-D corresponds to a median line of a roof 26 and makes an angle β of more than 5° and less than 10°, preferably between 6° and 8°, e.g. 7° with the horizontal reference plane Y-Y.

The distance between the plane B-B and the plane D-D is greater that half the overall length of the nose.

Also depicted in Fig. 2 is a horizontal reference plane Y-Y of the vehicle, which divides the nose of the vehicle in an upper part located above the horizontal reference plane Y-Y and a lower part located below the horizontal reference plane Y-Y. The reference plane is located above a front bogie 28 of the vehicle and above the front end 16 of the vehicle.

The hull of the nose 14 includes the tip segment 18, two external side walls 30, an inclined front wall 32 in the region between the cross-sections A-A and B-B, the roof 26 and a bottom wall 34. Each side wall 30 includes a lower part 30L located below the horizontal plane, an upper part 30U extending from the horizontal reference plane Y-Y to the roof 26 and offset inwardly with respect to the lower part 30L and a substantially horizontal step 30S located in the horizontal plane and joining the upper and lower parts 30U, 30L of the side wall 30.

As illustrated in Fig. 5, the lower part of the nose of the vehicle has a width, which rapidly increases in the tip segment from the front end to the plane A-A and linearly increases from the plane A-A to a plane C-C where it reaches its maximum width, which is larger than the width of the front bogie 28 and equal to the width of the lower part of the central segment 12 of the vehicle. The plane C-C is located in front of the front bogie 28 in the intermediate segment, i.e. between the plane B-B and the plane D-D. The distance between the front end 16 of the vehicle and the plane C-C is preferably approximately half the overall length of the nose 14. When seen from above, as illustrated in Fig. 5, the outline of the lower part 30L of the side walls diverges from the longitudinal median plane at an angle δ of preferably more than 5° and less than 10°, preferably in the range of 7°. Crash absorber elements 36 are housed in the lower part of the nose of the vehicle and extend at least partially into the segment of the vehicle nose located between the cross-sectional planes A-A and B-B. A coupler 38 can also be provided in this region.

The upper part 30U of each of the side walls is substantially vertical as best illustrated in Fig. 4 and diverges from the vertical longitudinal median plane X-X depicted in Fig. 5 at a substantially constant angle γ of more than 5°, preferably more than 6° and less than 10°, preferably less than 8°. The vertical longitudinal median plane X-X is preferably a symmetry plane for the hull of the nose. The upper part 30U of the side walls 30 extends longitudinally from the central segment 12 of the vehicle at its rear end to at least the front end of the windshield 24 at its front end and preferably up to the plane A-A, i.e. in the example illustrated in the drawings over approximately 90% of the total length of the nose 14 of the vehicle.

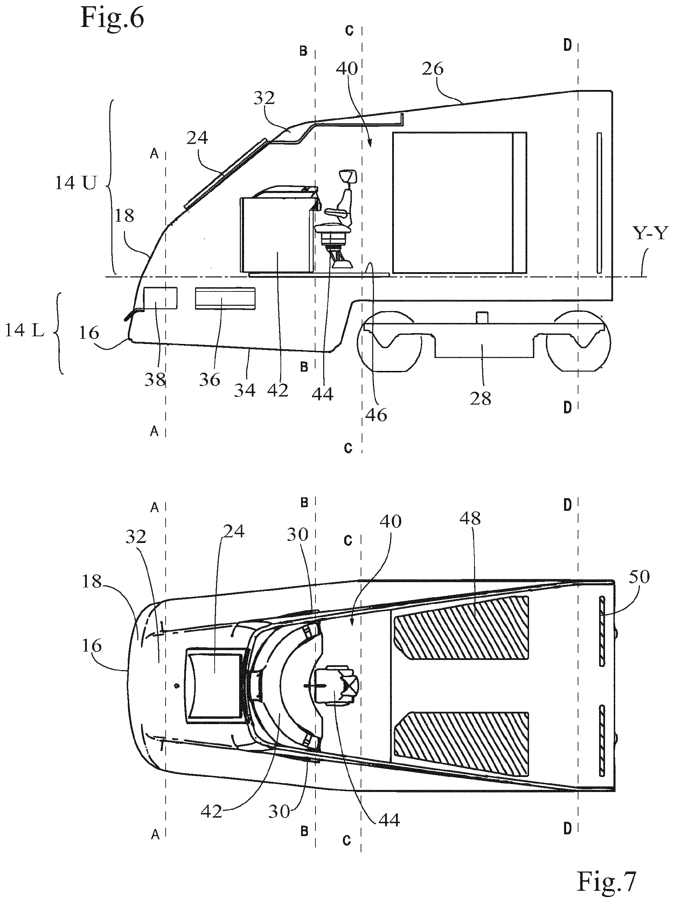

A driving cabin 40, illustrated in Figs. 6 and 7, is at least partially located longitudinally between the windshield 24 and a front end of the front bogie 28, i.e. between planes B-B and C-C and laterally between the side walls. It includes a driver's console 42 and a driver's seat 44, which in this example is located in front of the cross-section C-C, i.e. in front of the front bogie 28. The driving cabin 40 has a floor 46 located above the horizontal reference plane Y-Y. It may be provided with electrical cubicles 48 and a cabin partition wall 50 provided with a door.

In practice, in consideration of the width of the central segment 12 of the rail vehicle, of the overall length of the nose 14 and of the divergence angles γ, δ of the side walls, the width W of the upper part of the nose measured between the side walls, which progressively decreases towards the front end of the vehicle, reaches half the width W₀ of the central segment of the vehicle at a cross section which is located somewhere between the planes A-A and B-B, closer to the plane A-A. The rail vehicle is preferably provided with cameras (not shown) providing a view of the sides of the central segment 12 of the rail vehicle.

The inclined front wall 32, which closes the space in front of the driver, is arched to span from one side wall 30 to the other. It is provided with an opening for the windshield 24. The windshield 24 has preferably a substantially cylindrical or frusto-conical shape and is integrated to the front wall 32 so as to form part of a common cylindrical or frusto-conical geometric surface with the surrounding arched front wall 32. The distances between the driver's seat 44, the console 42 and the windshield 24 comply with UIC 651. As stated above, the slope angle of the inclined front wall with respect to the horizontal plane is in the range of 35° to 60°, and preferably 40° or more.

The width and height of each segment of the nose 14 are such that the cross-sectional area of the nose, i.e. the area between the side walls 30, the roof 26 or front wall 24 and the bottom wall 34 of the vehicle, varies at a substantially constant rate with the distance to the front end 16. This rule holds at least from the cross-sectional plane A-A to the cross-sectional plane D-D and preferably over the entire length of nose 14. The rail vehicle is provided with side covers (not shown) for the sides of the front bogie 28, to provide continuity with the lower part 30L of the side walls.

While the embodiment illustrated in the drawings refers to a front end of the vehicle, the invention also applies to a rear end of the vehicle.

## Claims

1. A rail vehicle (10) having a central segment (12) of substantially constant cross-sectional area and a nose (14) of varying cross-sectional area, the nose (14) consisting of a tip segment (18) including a front or rear end (16) of the rail vehicle, and an intermediate segment including an inclined transverse wall (32) provided with a windshield (24), external side walls (30) and a roof (26), the intermediate segment having a cross-sectional area that increases with the distance to the end (16), the vehicle being further provided with a bogie (28) at least partially located in the intermediate segment, the nose (14) being divided by a horizontal reference plane (Y-Y) in an upper part (14U) located above the horizontal reference plane (Y-Y) and a lower part (14L) located below the horizontal reference plane (Y-Y), **characterised in that**:
- a median line of the inclined wall (32) located at an intersection between the inclined wall (32) and a vertical longitudinal median plane (X-X) of the rail vehicle is rectilinear and has a slope of more than 35° and less than 60°, preferably less than 45°, preferably a slope of 40°;
- each of the external side walls (30) includes a lower wall part (30L) below the horizontal reference plane (Y-Y) and an upper wall part (30U) located above the reference plane (Y-Y), wherein the upper wall part (30U) is inwardly offset with respect to the lower wall part (30L), such that the upper part (14U) of the nose has a width measured in cross-section between the side walls (30), which, at least in the intermediate segment, increases with the distance to the end (16) of the vehicle.

2. The rail vehicle of claim 1, **characterised in that** the upper part (30U) of the side walls in the intermediate segment is planar or substantially planar.

3. The rail vehicle of claim 2, **characterised in that** the upper part (14U) of the nose has a width measured in cross-section between the side walls (30), which, at least in the intermediate segment, increases at a constant rate with the distance to the end of the vehicle.

4. The rail vehicle of claim 3, **characterised in that** the upper wall part (30U) makes with the vertical longitudinal plane (X-X) a constant angle of more than 5°, preferably more than 6° and less than 10°, preferably less than 8° measured in the horizontal reference plane (Y-Y).

5. The rail vehicle of claim 1, **characterised in that** the upper part (30U) of the side walls in the intermediate segment is curved.

6. The rail vehicle of any one of the preceding claims, **characterised in that** the bogie (28) is partially located in the nose (14).

7. The rail vehicle of any one of the preceding claims, **characterised in that** the horizontal reference plane (Y-Y) is above the bogie (28) and the lower part of the nose has a width which increases from the end (16) of the vehicle towards the bogie (28) so as to reach a maximal width larger than a width of the bogie (28).

8. The rail vehicle of any one of the preceding claims, **characterised in that** the upper side wall part (30U) of each of the side walls (30) extends at least from a tip end of the windshield (24) to the central segment (12).

9. The rail vehicle of any one of the preceding claims, **characterised in that** the upper side wall part (30U) of each of the side walls (30) is substantially vertical.

10. The rail vehicle of any one of the preceding claims, **characterised in that** the median line (22) of the roof (26) is substantially rectilinear and a median line (22) of the roof located at an intersection between the roof (36) and the vertical longitudinal median plane (X-X) and substantially extending from the windshield (26) to the central segment (12) of the train has a slope (β) of between 5° and 10°, preferably between 6° and 8°.

11. The rail vehicle of any one of the preceding claims, **characterised in that** the rail vehicle includes a driving cabin (40) provided with a driver's console (42) at least partially located longitudinally between the windshield (24) and a tip end of the bogie (28) and laterally between the upper side wall parts (30U) wherein the rail vehicle is preferably provided with cameras to take images of the sides of the rail vehicle and one or more display screens in the driving cabin to display said images.

12. The rail vehicle of any one of claim 11, **characterised in that** the driving cabin has a floor (46) located above the horizontal reference plane (Y-Y).

13. The rail vehicle of any one of the preceding claims, **characterised in that** crash absorber elements (36) are housed in the lower part (14L) of the nose (14) of the vehicle.

14. The rail vehicle of claim 13, **characterised in that** the crash absorber elements (36) extend at least partially below the windshield (24).

15. The rail vehicle of any one of the preceding claims, **characterised in that** the end (16) of the vehicle is located below the horizontal plane (Y-Y).

16. The rail vehicle of any one of the preceding claims, **characterised in that** the inclined wall (32) has a substantially cylindrical or frusto-conical geometric envelope.

17. The rail vehicle of any one of the preceding claims, **characterised in that** the nose (14) has a cross-sectional area which varies substantially linearly with the distance to the end (16) of the vehicle.

18. The rail vehicle of claim 17, **characterised in that** the cross-sectional area A(x) of the nose varies with the distance (x) to the end (16) of the vehicle, at a rate dA(x)/d(x) in the range of 2,1±0,1 meters both in the tip segment and intermediate segment.

## Patentansprüche

1. Schienenfahrzeug (10) mit einem zentralen Segment (12) mit einer im Wesentlichen konstanten Querschnittsfläche und einer Nase (14) mit variierender Querschnittsfläche, wobei die Nase (14) aus einem Spitzensegment (18), das ein vorderes oder hinteres Ende (16) des Schienenfahrzeugs einschließt, und einem Zwischensegment, das eine geneigte transversale Wand (32) einschließt, die mit einer Windschutzscheibe (24), externen Seitenwänden (30) und einem Dach (26) bereitgestellt ist, gebildet ist, wobei das Zwischensegment eine Querschnittsfläche hat, die mit der Entfernung zu dem Ende (16) ansteigt, wobei das Fahrzeug weiterhin mit einem Drehgestell (28) bereitgestellt ist, das wenigstens teilweise in dem Zwischensegment angeordnet ist, wobei die Nase (14) durch eine horizontale Referenzebene (Y-Y) in einem oberen Teil (14U), der über der horizontalen Referenzebene (Y-Y) angeordnet ist, und einem unteren Teil (14L), der unter der horizontalen Referenzebene (Y-Y) angeordnet ist, unterteilt ist **dadurch gekennzeichnet, dass**:
- eine mediane Linie der geneigten Wand (32), die an einem Schnittpunkt zwischen der geneigten Wand (32) und einer vertikalen länglichen medianen Ebene (X-X) des Schienenfahrzeugs angeordnet ist, geradlinig ist und eine Neigung von mehr als 35° und weniger als 60°, bevorzugt weniger als 45°, bevorzugt eine Neigung von 40° hat;
- jede der externen Seitenwände (30) einen unteren Wandteil (30L) unter der horizontalen Referenzebene (Y-Y) und einen oberen Wandteil (30U) einschließt, der über der Referenzebene (Y-Y) angeordnet ist, wobei der obere Wandteil (30U) einwärts in Bezug auf den unteren Wandteil (30L) derart ausgeglichen ist, dass der obere Teil (14U) der Nase eine im Querschnitt zwischen den Seitenwänden (30) gemessene Breite hat, die wenigstens im Zwischensegment mit der Entfernung zu dem Ende (16) des Fahrzeugs ansteigt.

2. Schienenfahrzeug gemäß Anspruch 1, **dadurch gekennzeichnet, dass** der obere Teil (30U) der Seitenwände in dem Zwischensegment planar oder im Wesentlichen planar ist.

3. Schienenfahrzeug gemäß Anspruch 2, **dadurch gekennzeichnet, dass** der obere Teil (14U) der Nase eine im Querschnitt zwischen den Seitenwänden (30) gemessene Breite hat, die wenigstens im Zwischensegment mit einem konstanten Maß mit der Entfernung zu dem Ende des Fahrzeugs ansteigt.

4. Schienenfahrzeug gemäß Anspruch 3, **dadurch gekennzeichnet, dass** der oberen Wandteil (30U) mit der vertikalen länglichen Ebene (X-X) einen konstanten Winkel von mehr als 5°, bevorzugt von mehr als 6° und weniger als 10°, bevorzugt weniger als 8° gemessen in der horizontalen Referenzebene (Y-Y) ausmacht.

5. Schienenfahrzeug gemäß Anspruch 1, **dadurch gekennzeichnet, dass** der obere Teil (30U) der Seitenwände in dem Zwischensegment gekrümmt ist.

6. Schienenfahrzeug gemäß irgendeinem der voranstehenden Ansprüche, **dadurch gekennzeichnet, dass** das Drehgestell (28) teilweise in der Nase (14) angeordnet ist.

7. Schienenfahrzeug gemäß irgendeinem der voranstehenden Ansprüche, **dadurch gekennzeichnet, dass** die horizontale Referenzebene (Y-Y) über dem Drehgestell (28) angeordnet ist und der untere Teil der Nase eine Breite hat, die von dem Ende (16) des Fahrzeugs zu dem Drehgestell (28) derart ansteigt, dass eine maximale Breite erreicht wird, die breiter ist als die Breite des Drehgestells (28).

8. Schienenfahrzeug gemäß irgendeinem der voranstehenden Ansprüche, **dadurch gekennzeichnet, dass** der obere Seitenwandteil (30U) jeder Seitenwand (30) sich wenigstens von einem Spitzenende der Windschutzscheibe (24) bis zum zentralen Segments (12) erstreckt.

9. Schienenfahrzeug gemäß irgendeinem der voranstehenden Ansprüche, **dadurch gekennzeichnet, dass** der obere Seitenwandteil (30U) jeder Seitenwand (30) im Wesentlichen vertikal ist.

10. Schienenfahrzeug gemäß irgendeinem der voranstehenden Ansprüche, **dadurch gekennzeichnet, dass** die mediane Linie (22) des Dachs (26) im Wesentlichen geradlinig ist und eine mediane Linie (22) des Dachs, die an einem Schnittpunkt zwischen dem Dach (36) und der vertikalen länglichen medianen Ebene (X-X) angeordnet ist und sich im Wesentlichen von der Windschutzscheibe (26) zum zentralen Segment (12) des Zugs erstreckt, eine Neigung (β) zwischen 5° und 10°, bevorzugt zwischen 6° und 8° hat.

11. Schienenfahrzeug gemäß irgendeinem der voranstehenden Ansprüche, **dadurch gekennzeichnet, dass** das Schienenfahrzeug eine Fahrerkabine (40) einschließt, die mit einem Bedienungsplatz (42) des Fahrers bereitgestellt ist, und sich wenigstens teilweise in Längsrichtung zwischen der Windschutzscheibe (24) und einem Spitzenende des Drehgestells (28) und lateral zwischen den oberen Seitenwandteilen (30U) befindet, wobei das Schienenfahrzeug bevorzugt mit Kameras, um Bilder der Seiten des Schienenfahrzeugs aufzunehmen, und einem oder mehreren Anzeigebildschirm(en) in der Fahrerkabine, um die genannten Bilder anzuzeigen, bereitgestellt ist.

12. Schienenfahrzeug gemäß Anspruch 11, **dadurch gekennzeichnet, dass** die Fahrerkabine einen Fußboden (46) hat, der über der horizontalen Referenzebene (Y-Y) angeordnet ist.

13. Schienenfahrzeug gemäß irgendeinem der voranstehenden Ansprüche, **dadurch gekennzeichnet, dass** Stoßfängerelemente (36) in dem unteren Teil (14L) der Nase (14) des Fahrzeugs untergebracht sind.

14. Schienenfahrzeug gemäß Anspruch 13, **dadurch gekennzeichnet, dass** die Stoßfängerelemente (36) sich wenigstens teilweise unter der Windschutzscheibe (24) erstrecken.

15. Schienenfahrzeug gemäß irgendeinem der voranstehenden Ansprüche, **dadurch gekennzeichnet, dass** das Ende (16) des Fahrzeugs unter der horizontalen Ebene (Y-Y) angeordnet ist.

16. Schienenfahrzeug gemäß irgendeinem der voranstehenden Ansprüche, **dadurch gekennzeichnet, dass** die geneigte Wand (32) eine im Wesentlichen zylindrische oder kegelstumpfartige geometrische Umhüllung hat.

17. Schienenfahrzeug gemäß irgendeinem der voranstehenden Ansprüche, **dadurch gekennzeichnet, dass** die Nase (14) eine Querschnittsfläche hat, die im Wesentlichen linear mit der Entfernung zu dem Ende (16) des Fahrzeugs variiert.

18. Schienenfahrzeug gemäß Anspruch 17, **dadurch gekennzeichnet, dass** die Querschnittsfläche A(x) der Nase mit der Entfernung (x) zu dem Ende (16) des Fahrzeugs in einem Maß dA(x)/d(x) in dem Bereich von 2,1+/- 0,1 Meter sowohl im Spitzensegment als auch im Zwischensegment variiert.

## Revendications

1. Véhicule ferroviaire (10) ayant un segment central (12) ayant une aire de section transversale qui est sensiblement constante et un nez (14) ayant une aire de section transversale qui varie, le nez (14) comportant un segment de bout (18) incluant une extrémité avant ou arrière (16) du véhicule ferroviaire, et un segment intermédiaire comportant une paroi transversale inclinée (32) équipée d'un pare-brise (24), de parois latérales extérieures (30) et d'un toit (26), le segment intermédiaire ayant une aire de section transversale qui augmente avec la distance la séparant de l'extrémité (16), le véhicule étant en outre équipé d'un bogie (28) situé au moins partiellement dans le segment intermédiaire, le nez (14) étant divisé par un plan de référence horizontal (Y-Y) en une partie supérieure (14U) qui se trouve au-dessus du plan de référence horizontal (Y-Y) et une partie inférieure (14L) qui se trouve en dessous du plan de référence horizontal (Y-Y), **caractérisé en ce que** :
- une ligne médiane de la paroi inclinée (32) située à une intersection entre la paroi inclinée (32) et un plan médian longitudinal vertical (X-X) du véhicule ferroviaire est rectiligne et présente une pente de plus de 35° et de moins de 60°, de préférence de moins de 45°, de préférence de 40°;
- chacune des parois latérales extérieures (30) comprend une partie de paroi inférieure (30L) en dessous du plan de référence horizontal (Y-Y) et une partie de paroi supérieure (30U) qui se trouve au-dessus du plan de référence horizontal (Y-Y), la partie de paroi supérieure (30U) étant décalée vers l'intérieur par rapport à la partie de paroi inférieure (30L), de telle sorte que la partie supérieure (14U) du nez a une largeur mesurée en coupe transversale entre les parois latérales (30), qui, au moins dans le segment intermédiaire, augmente avec la distance par rapport à l'extrémité (16) du véhicule.

2. Véhicule ferroviaire selon la revendication 1, **caractérisé en ce que** la partie supérieure (30U) des parois latérales dans le segment intermédiaire est plane ou sensiblement plane.

3. Véhicule ferroviaire selon la revendication 2, **caractérisé en ce que** la partie supérieure (14U) du nez a une largeur mesurée en coupe transversale entre les parois latérales (30), qui, au moins dans le segment intermédiaire, augmente suivant un ratio constant avec la distance par rapport à l'extrémité du véhicule.

4. Véhicule ferroviaire selon la revendication 3, **caractérisé en ce que** la partie de paroi supérieure (30U) fait avec le plan longitudinal vertical (X-X) un angle constant supérieur à 5°, de préférence supérieur à 6°, et inférieur à 10°, de préférence inférieur à 8° mesuré dans le plan de référence horizontal (Y-Y).

5. Véhicule ferroviaire selon la revendication 1, **caractérisé en ce que** la partie supérieure (30U) des parois latérales dans le segment intermédiaire est incurvée.

6. Véhicule ferroviaire selon l'une quelconque des revendications précédentes, **caractérisé en ce que** le bogie (28) est partiellement localisé dans le nez (14).

7. Véhicule ferroviaire selon l'une quelconque des revendications précédentes, **caractérisé en ce que** le plan de référence horizontal (Y-Y) se trouve au-dessus du bogie (28) et la partie inférieure du nez a une largeur qui augmente depuis l'extrémité (16) du véhicule vers le bogie (28) de manière à atteindre une largeur maximale supérieure à une largeur du bogie (28).

8. Véhicule ferroviaire selon l'une quelconque des revendications précédentes, **caractérisé en ce que** la partie de paroi latérale supérieure (30U) de chacune des parois latérales (30) s'étend au moins entre une extrémité de bout du pare-brise (24) et le segment central (12).

9. Véhicule ferroviaire selon l'une quelconque des revendications précédentes, **caractérisé en ce que** la partie de paroi latérale supérieure (30U) de chacune des parois latérales (30) est sensiblement verticale.

10. Véhicule ferroviaire selon l'une quelconque des revendications précédentes, **caractérisé en ce que** la ligne médiane (22) du toit (26) est sensiblement rectiligne et une ligne médiane (22) du toit située à une intersection entre le toit (36) et le plan médian longitudinal vertical (X-X) et s'étendant sensiblement entre le pare-brise (26) et le segment central (12) du train présente une pente (β) comprise entre 5° et 10°, de préférence entre 6° et 8°.

11. Véhicule ferroviaire selon l'une quelconque des revendications précédentes, **caractérisé en ce que** le véhicule ferroviaire comprend une cabine de conduite (40) équipée d'une console de commande du conducteur (42) au moins partiellement située longitudinalement entre le pare-brise (24) et une extrémité de bout du bogie (28) et latéralement entre les parties de parois latérales supérieures (30U), le véhicule ferroviaire étant de préférence équipé de caméras permettant de prendre des images des côtés du véhicule ferroviaire et un ou plusieurs écran(s) dans la cabine de conduite permettant d'afficher lesdites images.

12. Véhicule ferroviaire selon la revendication 11, **caractérisé en ce que** la cabine de conduite possède un plancher (46) situé au-dessus du plan de référence horizontal (Y-Y).

13. Véhicule ferroviaire selon l'une quelconque des revendications précédentes, **caractérisé en ce que** des éléments absorbeurs de chocs (36) sont logés dans la partie inférieure (14L) du nez (14) du véhicule.

14. Véhicule ferroviaire selon la revendication 13, **caractérisé en ce que** les éléments absorbeurs de chocs (36) s'étendent au moins partiellement en dessous du pare-brise (24).

15. Véhicule ferroviaire selon l'une quelconque des revendications précédentes, **caractérisé en ce que** l'extrémité (16) du véhicule se trouve en dessous du plan horizontal (Y-Y).

16. Véhicule ferroviaire selon l'une quelconque des revendications précédentes, **caractérisé en ce que** la paroi inclinée (32) possède une enveloppe géométrique sensiblement cylindrique ou tronconique.

17. Véhicule ferroviaire selon l'une quelconque des revendications précédentes, **caractérisé en ce que** le nez (14) possède une aire de section transversale qui varie sensiblement linéairement avec la distance la séparant de l'extrémité (61) du véhicule.

18. Véhicule ferroviaire selon la revendication 17, **caractérisé en ce que** l'aire de section transversale A(x) du nez varie avec la distance (x) la séparant de l'extrémité (16) du véhicule, suivant un ratio dA(x)/d(x) dans la fourchette de 2,1 ± 0,1 mètre à la fois dans le segment de bout et dans le segment intermédiaire.
